# EUROPÄISCHE PATENTSCHRIFT

(11) **EP 0 374 706 B1**
(45) Veröffentlichungstag und Bekanntmachung des Hinweises auf die Patenterteilung: **22.03.1995**
(21) Anmeldenummer: 89122997.3
(22) Anmeldetag: 13.12.1989
(51) Int. Cl.: C08F 283/00

(54) **Carbonsäureester von hydroxylgruppenhaltigen Pfropfpolymerisaten und Verfahren zu ihrer Herstellung**
Carboxylic acid ester of a graft polymer which contains hydroxyl groups and a process for the production thereof
Ester carboxylique de polymères greffés contenant des groupes hydroxyles et procédé pour sa fabrication

(30) Priorität: 23.12.1988 DE 3843505
(43) Veröffentlichungstag der Anmeldung: 27.06.1990
(73) Patentinhaber: HOECHST AKTIENGESELLSCHAFT, 65926 Frankfurt am Main (DE)
(72) Erfinder: Gersdorf, Joachim, Dr. Dipl.-Chem., D-6200 Wiesbaden (DE); Kroggel, Matthias, Dr. Dipl.-Chem., D-6233 Kelkheim (DE)

(56) Entgegenhaltungen:
- EP-A- 0 286 019
- EP-A- 0 308 115
- EP-A- 0 308 832
- DE-A- 3 541 162

## Beschreibung

Die Erfindung betrifft hydroxylgruppenhaltige Pfropfpolymerisate basierend auf einer Pfropfgrundlage, die ein Polymeres aus Diolkomponenten und Diisocyanatkomponenten mit mindestens zwei Urethangruppen im Molekül enthält, auf die Polymerketten aus Einheiten von Carbonsäurevinylestern mit 3 bis 20 Kohlenstoffatomen und/oder deren Verseifungsprodukten und/oder ggf. von weiteren ethylenisch ungesättigten Monomeren und/oder deren Verseifungsprodukten aufgepfropft sind.

Die Verbindungen der beschriebenen Art sind aus der deutschen Patentanmeldung P 37 32 089.0 bekannt. Die Einführung von Estergruppen in solche Polymere wird z.B. in: Houben-Weyl, Methoden der organischen Chemie, Band 14/2, Seite 723ff (1963) beschrieben.

Ebenso ist die Modifizierung von Hydroxylgruppen in Polymeren Stand der Technik. Zur Modifizierung wird zunächst mit Acylierungsreagenzien wie z.B. Estern, Carbonsäurechloriden oder Carbonsäureanhydriden umgesetzt. Durch diese Weiterreaktion der Hydroxylgruppen des Polymeren kann dessen Löslichkeit in unterschiedlichen Lösemitteln maßgeschneidert werden.

Die Umsetzung als solche ist auf unterschiedlichem Wege möglich:
In der DE-A 31 44 905 (= US-A 4 517 277) wird ein als Bindemittel für ein lichtempfindliches Aufzeichnungsmaterial geeigneter Polyvinylalkohol mit einem polymerisierbare Gruppen enthaltenden Acylierungsmittel in hohem Überschuß in einem aprotischen Dispergiermittel umgesetzt. Der Nachteil dieses Verfahrens ist der notwendige hohe Überschuß an Acylierungsmittel, sowie daß nicht in Lösung umgesetzt werden kann, sondern in Suspension gearbeitet werden muß.

In der DE-C 15 22 359 (=US-A 3 427 161) wird eine entsprechende Umsetzung von einem Mischpolymeren aus Vinylacetat und Vinylalkohol mit Methacrylsäurechlorid in Pyridin beschrieben. In diesem Fall ist Pyridin sowohl Katalysator als auch Reaktionsmedium.

In der DE-A 33 22 994 (= US-A 4 554 240) wird erkannt, daß durch Verwendung von Aminen als Katalysatoren, insbesondere von p-Aminopyridinen, der Überschuß an Acylierungsmittel verringert werden kann, z.B. auf die 1,1-bis 1,5fache molare Menge. Die Reaktion wird aber dennnoch in heterogener Phase, d.h. in einem aprotischen Dispergiermittel, durchgeführt.

Auch die DE-A 35 41 162 (= AU 86/65535) beschreibt eine Umsetzung von Polyalkylenoxid-vinylester-Pfropfcopolymerisaten mit Methacrylsäureanhydrid in Gegenwart eines Amins als Katalysator, diesmal: p-Dimethylaminopyridin. Auch in diesem Fall ist davon auszugehen, daß es sich um eine heterogene Reaktion handelt - die Reaktion wird in Dimethylformamid durchgeführt -, das Edukt wird im Reaktionsmedium lediglich aufgequollen.

Obwohl durch Verwendung der bisher beschriebenen Katalysatoren der Überschuß an Carbonsäurederivaten verringert werden kann, haftet allen diesen Katalysatoren ein großer, zusätzlicher Nachteil an: Die aus diesen Reaktionen hervorgehenden Produkte sind gefärbt und daher nur bedingt, zumindest aber unter Inkaufnahme von großen Nachteilen, als Bindemittel für lichtempfindliche Gemische verwendbar.

Daß die Färbung der Produkte, die den Fachleuten, die auf dem Gebiet arbeiten, bekannt ist, auf die Katalysatoren zurückzuführen ist, geht u.a. aus der DE-A 35 34 476 (= US-A 4 778 847) hervor. In dieser Schrift wird anstelle der bisherigen Aminoverbindungen als Katalysator ein bestimmtes Imidazol vorgeschlagen. Die Färbung des Produkts soll durch Verwendung dieses Katalysators verringert werden, eine gewisse Färbung ist aber nach den dortigen Angaben noch vorhanden. Eine praktische Verwendung dieses speziellen Katalysators ist außerdem weniger vorteilhaft, da er relativ teuer ist. Ebenso zeigen die dortigen Beispiele, daß es sich um eine heterogen geführte Reaktion handelt, da die Reaktionspartner im Reaktionsmedium lediglich dispergiert werden.

Es bestand daher die Aufgabe, ein mindestens teilweise verestertes hydroxylgruppenhaltiges Polymerisat bereitzustellen, das
- farblos ist,
- in einfacher Weise in homogener Phase herzustellen ist, welches die Voraussetzung ist für das Erzeugen gleichmäßiger und reproduzierbarer Produkte, und
- dessen Löslichkeit in Wasser, wäßrigem Alkali (Sodalösung) oder organischen Lösemitteln leicht durch den Umsetzungsgrad der Veresterungsreaktion einzustellen ist. Insbesondere soll das Polymerisat in Wasser unlöslich sein, aber in wäßrigem Alkali oder in Alkohol, insbesondere in Ethanol, löslich.

Gelöst wird die Aufgabe durch ein hydroxylgruppenhaltiges Pfropfpolymerisat der eingangs beschriebenen Gattung, das dadurch gekennzeichnet ist, daß es mit einem Acylierungsreagenz in der Schmelze in homogener Phase verestert wird. Besonders bevorzugt sind teilveresterte Pfropfpolymerisate.

Als hydroxylgruppenhaltige Pfropfpolymerisate werden solche Verbindungen verstanden, die aus der Pfropfung von Carbonsäurevinylestern und/oder deren Verseifungsprodukten und gegebenenfalls weiterer Monomereinheiten aus ethylenisch ungesättigten polymerisationsfähigen Verbindungen und deren Verseifungsprodukte auf eine Pfropfgrundlage hervorgehen. Der prozentuale Anteil der aufgepfropften Komponenten beträgt 10 bis 99 Gew.-%, vorzugsweise 30 bis 90 Gew.-%, insbesondere 40 bis 80 Gew.-%, bezogen auf das Gesamtpfropfpolymerisat.

Als Pfropfungsgrundlagen werden solche genannt, die aus Polyurethanen mit mindestens 2 Urethangruppen im Molekül bestehen, wobei die Anzahl der Urethangruppen pro Pfropfungsgrundlagenmolekül nach oben keiner besonderen Begrenzung unterliegt und im allgemeinen höhere Werte als 2 hat.

Prinzipiell sind alle bei der Polyurethansynthese verwendbaren Diole einsetzbar Bevorzugt werden cycloaliphatische Diole, wie z.B. Cyclohexandiole, sowie aliphatische Diole mit vorzugsweise 2 bis 12 C-Atomen. Bevorzugt sind ferner Polyetherdiole, z.B. Polypropylenoxide, Polybutylenoxide, Mischpolymere aus Ethylenoxid, Propylenoxid, Butylenoxid, vorzugsweise deren Blockcopolymere, besonders bevorzugt sind Polyethylenoxide.

Vorzugsweise werden Polyetherdiole, insbesondere Polyethylenglykole, mit Molekulargewichten zwischen 200 und 10.000 verwendet, wobei Polyethylenglykole mit Molekulargewichten zwischen 400 und 1.500 besonders bevorzugt sind. Die Polyetherdiole werden gegebenenfalls in Kombination mit niedermolekularen aliphatischen Diolen, wie z.B. 1,4-Butandiol, 1,3-Propandiol, Ethylenglykol bzw. Diethylenglykol, eingesetzt. Bevorzugt liegt ein molares Verhältnis von Polyetherdiol zu niedermolekularem aliphatischem Diol von 1:0,1 bis 1:0,7 vor.

Als Diisocyanatkomponenten Können aromatische Diisocyanate, z.B. m- und p-Xylylendiisocyanat, Tolylen-2,4-diisocyanat, Tolylen-2,6-diisocyanat oder Gemische der beiden letzteren Isomeren, Naphthylen-1,5-diisocyanat, Diphenylmethan-4,4′-diisocyanat, Phenylbenzyl-4,4′-diisocyanat verwendet werden.

Bevorzugt werden aliphatische und/oder cycloaliphatische Diisocyanate eingesetzt. Bevorzugte aliphatische Diisocyanate sind z.B. solche mit 2 bis 12 C-Atomen im aliphatischen Rest, z.B. Ethylendiisocyanat, Propylendiisocyanat, Tetramethylendiisocyanat, 2,2,4-Trimethylhexamethylendiisocyanat. Bevorzugte cycloaliphatische Diisocyanate sind z.B. 1,4-Diisocyanato-cyclohexan, Dicyclohexylmethandiisocyanat und Isophorondiisocyanat. Besonders bevorzugt ist die Verwendung von Hexamethylendiisocyanat und Isophorondiisocyanat.

Das Molverhältnis von Diol- zur Diisocyanatkomponente liegt vorzugsweise zwischen 1:0,99 und 1:0,5, insbesondere zwischen 1:0,98 und 1:0,7. Die mittleren Molekulargewichte der Polyurethane liegen vorzugsweise zwischen 200 und 100.000, insbesondere zwischen 1.300 und 50.000, besonders bevorzugt zwischen 3.000 und 25.000. Zur Regelung des Molekulargewichtes bei der Herstellung der Polyurethane können Monohydroxyverbindungen, wie z.B. Methanol, Ethanol oder andere aliphatischen Alkohole, insbesondere solche der allgemeinen Formel CₙH₂ₙ₊₂O mit n = 1 bis 4, verwendet werden, aber auch halbveresterte oder halbveretherte Diole bzw. Diolkomponenten. Darüber hinaus finden zur Molekulargewichtssteuerung Monoisocyanate Verwendung.

Es ist darauf hinzuweisen, daß z.B. bei vorgegebenem Molekulargewicht für die Pfropfgrundlage die Anzahl ihrer Urethangruppen direkt von den Molekulargewichten der verwendeten Diol- bzw. Diisocyanat-Komponenten abhängt.

Zum Pfropfen auf das Polyurethan werden Carbonsäurevinylester mit 3 bis 20 C-Atomen, vorzugsweise mit 4 bis 14 C-Atomen, eingesetzt. Besonders bevorzugt werden Vinylacetat und/oder Vinylpropionat, insbesondere Vinylacetat. Bevorzugt sind ferner Gemische aus Vinylacetat und/oder Vinylpropionat und Vinylversatat. Insbesondere bei Teil- oder Vollverseifung der Produkte im Anschluß an die Pfropfpolymerisation ist beim Pfropfen die Mitverwendung von Vinylpropionat neben Vinylacetat vorteilhaft. Außerdem lassen sich copolymerisierbare Gemische aus Carbonsäurevinylestern pfropfen, vorzugsweise Gemische aus Vinylacetat und Vinylversatat, wobei der Vinylversatatanteil 0,2 bis 10 Gew.-%, vorzugsweise 0,5 bis 5 Gew.-%, bezogen auf den Vinylacetatanteil, beträgt. Auch das Pfropfen mit verschiedenen Carbonsäurevinylestern in Form von Blockcopolymeren, gegebenenfalls in Kombination mit weiteren ethylenisch ungesättigten und copolymerisationsfähigen Monomeren, kann vorteilhaft sein.

Weiterhin können die Carbonsäurevinylester auch zusammen mit anderen ethylenisch ungesättigten und copolymerisierbaren Monomeren, wie z.B. Maleinsäure, Itaconsäure, Mesaconsäure, Crotonsäure, Acrylsäure oder deren Estern, gepfropft werden.

Das Pfropfen wird unter Verwendung von Radikalketten startenden Pfropfkatalysatoren durchgeführt. Hierfür kommen vorzugsweise alle in den Monomeren, der Monomerenmischung bzw. der Monomerenlösung löslichen Radikalbildner in Betracht. Insbesondere sind zu nennen: organische Per-Verbindungen, wie Peroxide und Percarbonate und organische Azo-Verbindungen. Bevorzugt wird Azo-bis-isobutyronitril und besonders Dibenzoylperoxid. Die Pfropfreaktion wird in Gegenwart von vorzugsweise 0,013 bis 1,3 mol-%, insbesondere 0,026 bis 0,27 mol-%, Radikale bildendem Katalysator, bezogen auf die Monomerenmenge, durchgeführt.

Die erhaltenen hydroxylgruppenhaltigen Pfropfpolymerisate lassen sich durch Hydrolyse, Alkoholyse oder Umesterung in teil- oder vollverseifte Produkte überführen, wobei der Hydrolysegrad mindestens 1 mol-%, vorzugsweise 70 bis 99 mol-%, bezogen auf die Molzahl verseifbarer Monomereinheiten im Pfropfpolymerisat, beträgt.

Das Verfahren zur Herstellung der hydroxylgruppenhaltigen Pfropfpolymerisate wird in der deutschen Patentanmeldung P 37 32 089 beschrieben.

Als Acylierungsreagenzien zur Herstellung der erfindungsgemäßen veresterten hydroxylgruppenhaltigen Pfropfpolymerisate eignen sich insbesondere Carbonsäureanhydride. Vorzugsweise werden Alkan-, Alken- und/oder Acrylcarbonsäureanhydride mit 2 bis 12 C-Atomen verwendet. Zu nennen sind z.B.: Bernsteinsäureanhydrid, Maleinsäureanhydrid, Citraconsäureanhydrid, Glutarsäureanhydrid, Phthalsäureanhydrid, Cis-4-cyclohexen-1,2-dicarbonsäureanhydrid, Acrylsäureanhydrid, Methacrylsäureanhydrid, Crotonsäureanhydrid und Itaconsäureanhydrid. Auch Mischungen von Carbonsäureanhydriden können eingesetzt werden.

Der Grad der Umsetzung von freien Hydroxylgruppen des Pfropfpolymerisats mit den genannten Acylierungsreagenzien zur Herstellung des erfindungsgemäßen veresterten Produkts hängt von dessen gewünschten Eigenschaften ab, insbesondere der Lösungseigenschaften des Produkts. Es können sowohl verseifte wie auch teilverseifte Pfropfpolymerisate als Ausgangsmaterial für die Veresterungsreaktion eingesetzt werden. Unter teilverseiften Pfropfpolymerisaten versteht man im allgemeinen Produkte, die zu 80 bis 90 mol-% verseift sind (Hydrolysegrad).

Weniger üblich sind teilverseifte Produkte, die einen Hydrolysegrad von 50 bis 60 % aufweisen.

Im allgemeinen läßt sich der Umsetzungsgrad des hydroxylgruppenhaltigen Pfropfpolymerisates mit dem Acylierungsreagenz in der Weise beschreiben, daß das Gewichtsverhältnis von Pfropfpolymerisat zu Acylierungsreagenz, insbesondere bei Verwendung eines Carbonsäureanhydrids, bei 1:0,01 bis 1:5, bevorzugt bei 1:0,05 bis 1:2 liegt. Als Grundlage dieser Angabe dienen die teilverseiften Pfropfpolymerisate, die zu 80 bis 90 % verseift sind.

Letztendlich muß die Reaktion in der Weise eingestellt werden, daß das resultierende Produkt Anwendung als Bindemittel in einem lichtempfindlichen Gemisch finden kann. Hierzu gehört, daß die Entwicklung der Schicht in wäßrigem Alkali (insbesondere in 1%iger wäßriger Sodalösung) möglich ist, aber ebenso daß die entwickelte Reliefform nicht durch Wasser zerstört wird.

Das mittlere Molekulargewicht der erfindungsgemäßen, zumindest teilweise veresterten, hydroxylgruppenhaltigen Pfropfpolymerisate liegt vorzugsweise zwischen 200 und 100.000 bevorzugt 1.000 bis 50.000, insbesondere zwischen 1.300 und 26.000, besonders bevorzugt zwischen 3.000 und 17.000. Die Säurezahl des Produkts soll im Bereich von 80 bis 250 mg KOH/g Polymeres, insbesondere von 100 bis 200 mg KOH/g Polymeres, liegen.

Die Erfindung betrifft ebenso ein Verfahren zur Herstellung der veresterten, hydroxylgruppenhaltigen Pfropfpolymerisate.

In den erfindungsgemäßen Verfahren wird das hydroxylgruppenhaltige Pfropfpolymerisat entweder ohne Acylierungsreagenz oder auch gleichzeitig mit dem Acylierungsreagenz, vorzugsweise ohne Zusatz eines Lösemittels, aufgeschmolzen. Als Acylierungsreagenzien werden vorzugsweise Carbonsäureanhydride verwendet. Die Schmelztemperatur liegt im allgemeinen bei 80 bis 200° C, insbesondere bei 100 bis 180° C, sowie besonders bevorzugt bei 120 bis 160° C.

Die Reaktion wird ohne Zusatz eines Katalysators, der zur Färbung des Produktes führen kann, insbesondere von Aminen, durchgeführt. Die Reaktionszeit kann extrem kurz angesetzt werden und liegt im Bereich von einigen Minuten. Vorzugsweise ist die Reaktion schon nach einer Reaktionszeit unter 10 min beendet.

Die Veresterung kann, auch wenn die Zugabe des Acylierungsreagenzes nicht gleichzeitig mit dem Aufschmelzen erfolgte, in einem für die Durchführung von thermoplastischen Reaktionen üblichen Reaktionsgefäß bzw. Verarbeitungsgerät stattfinden. Solche Geräte sind beispielsweise: Zweiwalzenstühle, Knetmaschinen und Extrudiereinrichtungen. Überraschenderweise konnte gefunden werden, daß z.B. bei einer geplanten maximal 50%igen Umsetzung der im Pfropfpolymerisat enthaltenden sekundären Hydroxylgruppen (durch Anwendung eines entsprechenden Molverhältnisses der Edukte), die Reaktion auch ohne Verwendung des Katalysators schon nach wenigen Minuten vollständig abgelaufen ist. Das Produkt wird in homogener Phase erhalten. Es weist keine sonst in Kauf zu nehmenden örtlich unterschiedlichen Umsatzgrade im Pfropfpolymerisat auf; das Produkt hat demzufolge einheitlich reagiert und ist daher reproduzierbar herzustellen.

Die Verwendung des erfindungsgemäßen veresterten hydroxylgruppenhaltigen Pfropfpolymerisats wird in der gleichzeitig eingereichten deutschen Patentanmeldung P 38 43 506.3 beschrieben. Die erfindungsgemäßen Polymerisate finden Anwendung als Bindemittel für lichtempfindliche Gemische, insbesondere zur Herstellung von Flexodruckformen.

Die Erfindung wird anhand der nachfolgenden Beispiele näher erläutert, ohne darauf beschränkt zu werden. Neben dem erfindungsgemäßen Verfahren, aus dem das erfindungsgemäße veresterte hydroxylgruppenhaltige Pfropfpolymerisat hervorgeht, wird auch die Herstellung des hydroxylgruppenhaltigen Pfropfpolymerisates beschrieben. Dieses wird u.a charakterisiert durch die Grenzviskosität Jₒ [ml/g], gemessen bei 25° C in einem Ostwaldviskosimeter. Die Hydrolysegrade (Angabe in mol-%) beziehen sich auf die Gesamtheit der hydrolisierbaren Monomereinheiten im unverseiften Pfropfpolymerisat.

### Beispiel 1

### Herstellung des hydroxylgruppenhaltigen Pfropfpolymerisates

### a) Synthese der Polyurethan-Pfropfgrundlage

3.000 g Polyethylenglykol 600 und 193,1 g 1,4-Butandiol werden gemeinsam mit 1,5 ml 1,4-Dimethylpiperazin auf 75° C erwärmt und innerhalb von 6 Stunden mit 1.428,2 g Isophorondiisocyanat versetzt. Anschließend läßt man zwei Stunden bei 80° C nachreagieren.

Die Grenzviskosität Jₒ in Methanol des in dieser Weise hergestellten Polyurethans beträgt 10,6 ml/g.

### b) Synthese des Pfropfpolymerisates

1.500 g der Polyurethan-Pfropfgrundlage werden auf 80° C erwärmt und unter Rühren mit einem Gemisch aus 3.480 g Vinylacetat und 26,1 g Dibenzoylperoxid (75%ig) innerhalb von 5 Stunden versetzt. Nach 45 Minuten Weiterreagieren bei 80° C wird das nicht umgesetzte Vinylacetat durch azeotrope Destillation mit Methanol entfernt. Die Grenzviskosität Jₒ in THF des in dieser Weise hergestellten Pfropfpolymerisats beträgt 17,5 ml/g.

### c) Synthese des hydroxylgruppenhaltigen Pfropfpolymerisates

9.178 g einer 50%igen methanolischen Lösung des Pfropfpolymerisats werden bei Raumtemperatur mit 172,1 g einer 10%igen methanolischen NaOH und 172,1 g Wasser versetzt. Die Mischung geliert nach einiger Zeit und wird anschließend granuliert. Man schlämmt das erhaltene Granulat in Methanol auf und setzt eine zur NaOH äquivalente Menge an Essigsäure zu. Das Produkt wird abfiltriert, mehrmals mit Methanol gewaschen und getrocknet: Die Grenzviskosität Jₒ in Wasser beträgt 10,1 ml/g, der Hydrolysegrad 85,8 % und der Anteil an Vinylalkoholgruppen 42,2 %.

### Beispiel 2

### Veresterung des hydroxylgruppenhaltigen Pfropfpolymerisates

Nach dem Aufschmelzen von 100 g des in Beispiel 1c) beschriebenen teilverseiften Pfropfpolymerisates bei 140° C in einem Zweiwalzenstuhl werden 47,8 g Bernsteinsäureanhydrid bei dieser Temperatur zugegeben. Nach 6 min Reaktion bei 140° C ist die Reaktion beendet; es wird ein farbloses homogenes Produkt erhalten, das eine Säurezahl von 181 mg KOH/g Polymerisat aufweist. Das Produkt ist in Wasser nicht löslich, es löst sich aber klar sowohl in einer 1%igen wäßrigen Sodalösung wie auch in Ethanol.

### Beispiel 3

### Veresterung des hydroxylgruppenhaltigen Pfropfpolymerisates

50 g des in Beispiel 1c) beschriebenen teilverseiften Pfropfpolymerisates werden bei 140° C in einem Zweiwalzenstuhl aufgeschmolzen. Anschließend werden bei 140° C 23,5 g Maleinsäureanhydrid und 0,8 g 2,6-Ditert.-butyl-4-methylphenol zugegeben. Nach 4 min ist die Reaktion beendet. Das erhaltene Produkt ist farblos und weist eine Säurezahl von 133 mg KOH/g Polymerisat auf. Es löst sich in Wasser nur schwer unter Trübung, dagegen wird in l%iger wäßriger Sodalösung oder in Ethanol eine klare Lösung erhalten.

### Beispiel 4

### Veresterung des hydroxylgruppenhaltigen Pfropfpolymerisates

200 g des in Beispiel 1c) beschriebenen teilverseiften Pfropfpolymerisates, 94 g Maleinsäureanhydrid und 3,2 g 2,6-Di-tert.-butyl-4-methylphenol werden gemischt und anschließend gemeinsam in einem gegenläufigen Zweischneckenextruder mit einem Verhältnis von Schneckenlänge zu Schneckendurchmesser von 15 bei 140° C und einer Verweilzeit von 3 min extrudiert. Das farblose homogene Extrudat weist eine Säurezahl von 142 mg KOH/g Polymerisat auf und zeigt darüber hinaus die gleichen Eigenschaften wie das Polymerisat aus Beispiel 3.

## Patentansprüche

1. Hydroxylgruppenhaltiges Pfropfpolymerisat, basierend auf einer Pfropfgrundlage, die ein Polymeres aus Diolkomponenten und Diisocyanatkomponenten mit mindestens zwei Urethangruppen im Molekül enthält, auf die Polymerketten aus Einheiten von Carbonsäurevinylestern mit 3 bis 20 Kohlenstoffatomen und/oder deren Verseifungsprodukten und/oder von weiteren ethylenisch ungesättigten Monomeren und/oder deren Verseifungsprodukten aufgepfropft sind, dadurch gekennzeichnet, daß es durch Veresterung des Pfropfpolymerisats mit einem Acylierungsreagenz in der Schmelze in homogener Phase erhalten wird und der Anteil der aufgepfropften Komponenten 10 bis 99 Gew.-%, bezogen auf das Gesamtpfropfpolymerisat beträgt.

2. Pfropfpolymerisat nach Anspruch 1, dadurch gekennzeichnet, daß es sich um ein teilverestertes Produkt handelt.

3. Pfropfpolymerisat nach den Ansprüchen 1 oder 2, dadurch gekennzeichnet, daß das teilveresterte Produkt aus einem zu 80 bis 90 mol-% teilverseiften hydroxylgruppenhaltigen Pfropfpolymerisat durch Umsetzung mit dem Acylierungsreagenz hergestellt worden ist.

4. Pfropfpolymerisat nach Anspruch 3, dadurch gekennzeichnet, daß das Gewichtsverhältnis des hydroxylgruppenhaltigen Pfropfpolymerisates zum Acylierungsreagenz von 1:0,01 bis 1:5 reicht.

5. Pfropfpolymerisat nach einem oder mehreren der Ansprüche 1 bis 4, dadurch gekennzeichnet, daß als Acylierungsreagenz ein Carbonsäureanhydrid verwendet wird.

6. Pfropfpolymerisat nach einem oder mehreren der Ansprüche 1 bis 5, dadurch gekennzeichnet, daß das Polymerisat ein mittleres Molekulargewicht von 200 bis 100.000, insbesondere von 1.000 bis 50.000 aufweist.

7. Pfropfpolymerisat nach einem oder mehreren der Ansprüche 1 bis 6, dadurch gekennzeichnet, daß das Polymerisat eine Säurezahl von 80 bis 250 mg KOH/g Polymeres aufweist.

8. Pfropfpolymerisat nach einem oder mehreren der Ansprüche 1 bis 7, dadurch gekennzeichnet, daß das Polymerisat zu 10 bis 99 Gew.-%, insbesondere zu 30 bis 90 Gew.-%, bezogen auf das Gesamtpfropfpolymerisat, aufgepfropfte Komponenten enthält.

9. Pfropfpolymerisat nach einem oder mehreren der Ansprüche 1 bis 8, dadurch gekennzeichnet, daß die Pfropfgrundlage als Diol ein cycloaliphatisches Diol enthält.

10. Pfropfpolymerisat nach einem oder mehreren der Ansprüche 1 bis 8, dadurch gekennzeichnet, daß die Pfropfgrundlage als Diol ein Polyetherdiol enthält.

11. Pfropfpolymerisat nach einem oder mehreren der Ansprüche 1 bis 10, dadurch gekennzeichnet, daß die Pfropfgrundlage als Diisocyanat ein aliphatisches oder cycloaliphatisches Diisocyanat enthält.

12. Verfahren zur Herstellung eines mit einem Acylierungsreagenz umgesetzten Pfropfpolymerisats nach einem oder mehreren der Ansprüche 1 bis 11, dadurch gekennzeichnet, daß das hydroxylgruppenhaltige Pfropfpolymerisat ohne Zusatz eines Katalysators, der zur Färbung des Produkts führen kann, aufgeschmolzen und anschließend das Acylierungsreagenz hinzugegeben wird.

13. Verfahren zur Herstellung eines mit einem Acylierungsreagenz umgesetzten Pfropfpolymerisats nach einem oder mehreren der Ansprüche 1 bis 11, dadurch gekennzeichnet, daß das hydroxylgruppenhaltige Pfropfpolymerisat ohne Zusatz eines Katalysators, der zur Färbung des Produkts führen kann, mit dem Acylierungsreagenz gleichzeitig aufgeschmolzen wird.

14. Verfahren nach den Ansprüchen 12 oder 13, dadurch gekennzeichnet, daß das Aufschmelzen bei Temperaturen von 80 bis 200° C, insbesondere bei 100 bis 180° C, erfolgt.

15. Verfahren nach einem oder mehreren der Ansprüche 12 bis 14, dadurch gekennzeichnet, daß die Reaktion in einem Zweiwalzenstuhl, einer Knetmaschine oder einem Extruder durchgeführt wird.

16. Verfahren nach einem oder mehreren der Ansprüche 12 bis 15, dadurch gekennzeichnet, daß die Reaktion nach dem Aufschmelzen der Reaktionsmischung nach wenigen Minuten, insbesondere nach höchstens 10 Minuten, beendet ist.

17. Verfahren nach einem oder mehreren der Ansprüche 12 bis 16, dadurch gekennzeichnet, daß das Produkt in homogener Phase erhalten wird.

18. Verwendung des Pfropfpolymerisats nach einem oder mehreren der Ansprüche 1 bis 11 als Bindemittel für ein lichtempfindliche elastomeres Gemische, insbesondere zur Herstellung von lichtempfindlichen Flexodruckformen.

## Claims

1. A hydroxyl-containing graft copolymer based on a graft base which contains a polymer comprising diol components and diisocyanate components which has at least two urethane groups in the molecule, onto which graft base have been grafted polymer chains comprising units of vinyl esters of carboxylic acids, having 3 to 20 carbon atoms, and/or saponification products thereof and/or units of other ethylenically unsaturated monomers and/or saponification products thereof, obtained by esterification of the graft copolymer with an acylating reagent in the melt in homogeneous phase, the amount of the grafted components being from 10 to 99 % by weight, relative to the total graft copolymer.

2. The graft copolymer as claimed in claim 1, which is a partially esterified product.

3. The graft copolymer as claimed in claim 1 or 2, wherein the partially esterified product has been prepared from an 80 - 90 mol % saponified hydroxyl-containing graft copolymer by reaction with the acylating reagent.

4. The graft copolymer as claimed in claim 3, wherein the ratio by weight of the hydroxyl-containing graft copolymer to the acylating reagent extends from 1:0.01 to 1:5.

5. The graft copolymer as claimed in one or more of claims 1 to 4, wherein a carboxylic anhydride is used as the acylating reagent.

6. The graft copolymer as claimed in one or more of claims 1 to 5, wherein the polymer has an average molecular weight of 200 to 100,000, particularly of 1,000 to 50,000.

7. The graft copolymer as claimed in one or more of claims 1 to 6, wherein the polymer has an acid number of 80 to 250 mg of KOH/g of polymer.

8. The graft copolymer as claimed in one or more of claims 1 to 7, wherein the polymer contains 10 to 99% by weight, in particular 30 to 90% by weight, of grafted components relative to the total graft copolymer.

9. The graft copolymer as claimed in one or more of claims 1 to 8, wherein the graft base contains, as diol, a cycloaliphatic diol.

10. The graft copolymer as claimed in one or more of claims 1 to 8, wherein the graft base contains, as diol, a polyether diol.

11. The graft copolymer as claimed in one or more of claims 1 to 10, wherein the graft base contains, as diisocyanate, an aliphatic or cycloaliphatic diisocyanate.

12. A process for the preparation of a graft copolymer which has been reacted with an acylating reagent, as claimed in one or more of claims 1 to 11, which comprises melting the hydroxyl-containing graft copolymer without the addition of a catalyst which can lead to coloration of the product and then adding the acylating reagent.

13. A process for the preparation of a graft copolymer which has been reacted with an acylating reagent as claimed in one or more of claims 1 to 11, which comprises simultaneously melting the hydroxyl-containing graft copolymer with the acylating reagent without the addition of a catalyst which can lead to coloration of the product.

14. The process as claimed in claim 12 or 13, wherein melting is carried out at temperatures of 80 to 200°C, particularly at 100 to 180°C.

15. The process as claimed in one or more of claims 12 to 14, wherein the reaction is carried out in a two roll mill, in a kneader or in an extruder.

16. The process as claimed in one or more of claims 12 to 15, wherein the reaction ends a few minutes after melting of the reaction mixture, in particular after a maximum of 10 minutes.

17. The process as claimed in one or more of claims 12 to 16, wherein the product is obtained in homogeneous phase.

18. Use of the graft copolymer as claimed in one or more of claims 1 to 11 as a binder for a light-sensitive elastomeric mixture, in particular for the preparation of light-sensitive flexographic printing forms.

## Revendications

1. Polymère greffé contenant des groupes hydroxy, à base d'un support de greffe qui contient un polymère formé à partir de composants diol et de composants diisocyanate comportant au moins deux groupes uréthanne par molécule, sur lequel sont greffées des chaînes polymères composées de motifs d'esters vinyliques d'acides carboxyliques ayant de 3 à 20 atomes de carbone et/ou de leurs produits de saponification et/ou d'autres monomères à insaturation éthylénique et/ou de leurs produits de saponification, caractérisé en ce qu'il est obtenu sous forme homogène dans la masse fondue, par esterification du polymère greffé par un réactif d'acylation, et la proportion des composants greffés va de 10 à 99 % en poids, par rapport au polymère greffé total.

2. Polymère greffé selon la revendication 1, caractérisé en ce qu'il s'agit d'un produit partiellement estérifié.

3. Polymère greffé selon la revendication 1 ou 2, caractérisé en ce que le produit partiellement estérifié a été préparé à partir d'un polymère greffé contenant des groupes hydroxy, partiellement saponifiés à raison de 80 à 90 % en moles, par réaction avec le réactif d'acylation.

4. Polymère greffé selon la revendication 3, caractérisé en ce que le rapport pondéral du polymère greffé contenant des groupes hydroxy au réactif d'acylation va de 1:0,01 à 1:5.

5. Polymère greffé selon une ou plusieurs des revendications 1 à 4, caractérisé en ce que, en tant que réactif d'acylation, on utilise un anhydride d'acide carboxylique.

6. Polymère greffé selon une ou plusieurs des revendications 1 à 5, caractérisé en ce que le polymère présente une masse moléculaire moyenne de 200 à 100 000, en particulier de 1 000 à 50 000.

7. Polymère greffé selon une ou plusieurs des revendications 1 à 6, caractérisé en ce que le polymère présente un indice d'acide de 80 à 250 mg de KOH/g de polymère.

8. Polymère greffé selon une ou plusieurs des revendications 1 à 7, caractérisé en ce que le polymère contient des composants greffés à raison de 10 à 99 % en poids, en particulier de 30 à 90 % en poids, par rapport au polymère greffé total.

9. Polymère greffé selon une ou plusieurs des revendications 1 à 8, caractérisé en ce que le support de greffe contient en tant que diol un diol cycloaliphatique.

10. Polymère greffé selon une ou plusieurs des revendications 1 à 8, caractérisé en ce que le support de greffe contient en tant que diol un polyétherdiol.

11. Polymère greffé selon une ou plusieurs des revendications 1 à 10, caractérisé en ce que le support de greffe contient en tant que diisocyanate un diisocyanate aliphatique ou cycloaliphatique.

12. Procédé pour la préparation d'un polymère greffé ayant réagi avec un réactif d'acylation, selon une ou plusieurs des revendications 1 à 11, caractérisé en ce que l'on fait fondre le polymère greffé, contenant des groupes hydroxy, sans addition d'un catalyseur pouvant conduire à la coloration du produit, et on y ajoute ensuite le réactif d'acylation.

13. Procédé pour la préparation d'un polymère greffé ayant réagi avec un réactif d'acylation, selon une ou plusieurs des revendications 1 à 11, caractérisé en ce que le polymère greffé, contenant des groupes hydroxy, est fondu en même temps que le réactif d'acylation, sans addition d'un catalyseur pouvant conduire à la coloration du produit.

14. Procédé selon la revendication 12 ou 13, caractérisé en ce que la fusion s'effectue à des températures de 80 à 200°C, en particulier de 100 à 180°C.

15. Procédé selon une ou plusieurs des revendications 12 à 14, caractérisé en ce que la réaction est effectuée dans un mélangeur à deux cylindres, un malaxeur ou une extrudeuse.

16. Procédé selon une ou plusieurs des revendications 12 à 15, caractérisé en ce que la réaction est terminée au bout de quelques minutes, en particulier au bout de 10 minutes au maximum, après la fusion du mélange réactionnel.

17. Procédé selon une ou plusieurs des revendications 12 à 16, caractérisé en ce que le produit est obtenu en phase homogène.

18. Utilisation du polymère greffé selon une ou plusieurs des revendications 1 à 11, en tant que liant pour une composition élastomère photosensible, en particulier pour la production de formes d'impression flexographique photosensibles.
